# EUROPEAN PATENT APPLICATION

(11) **EP 4 257 408 A1**
(43) Date of publication of application: **11.10.2023**
(21) Application number: 23159707.1
(22) Date of filing: 02.03.2023
(51) Int. Cl.: B60L 3/04, B60L 53/12, B60L 5/00, B60K 28/00, B60W 50/14

(54) **MOVING BODY, GROUND POWER FEED DEVICE, AND NON-TRANSITORY STORAGE MEDIUM**

(30) Priority: 05.04.2022 JP 2022062985
(71) Applicant: TOYOTA JIDOSHA KABUSHIKI KAISHA, Aichi-Ken 471-8571 (JP)
(72) Inventor: YOKOYAMA, Daiki, Toyota-shi, 471-8571 (JP); HASHIMOTO, Toshiya, Toyota-shi, 471-8571 (JP); OKAZAKI, Shuntaro, Toyota-shi, 471-8571 (JP); TSUGE, Shogo, Toyota-shi, 471-8571 (JP); MATSUDA, Kazuhisa, Toyota-shi, 471-8571 (JP)
(74) Representative: D Young & Co LLP

(57) **Abstract**

A moving body includes a power receiving device (31) configured to receive contactless power feed from a ground power feed device (2), and a control device (30). The control device (30) is configured to take a getting-off prevention measure for preventing an occupant from getting off the moving body when the moving body gets into a state of being difficult to move on an electrified road where the ground power feed device (2) is installed.

## Description

### BACKGROUND OF THE INVENTION

### 1. Field of the Invention

The invention relates to a moving body, a ground power feed device, and a non-transitory storage medium.

### 2. Description of Related Art

Japanese Unexamined Patent Application Publication No. 2018-157686 (JP 2018-157686 A) discloses a contactless power feed system for contactlessly transmitting power to a traveling vehicle from a ground power feed device installed on the ground by using a transmission method such as magnetic field coupling (electromagnetic induction), electric field coupling, magnetic resonance coupling (magnetic field resonance), and electric field resonance coupling (electric field resonance).

### SUMMARY OF THE INVENTION

On a road where a ground power feed device is installed, a vehicle may be difficult to move due to some factor such as vehicle failure. In such a case, carelessly getting off the vehicle may cause the human body to be exposed to a leakage magnetic field generated when power is transmitted from the ground power feed device to the vehicle.

The invention provides a moving body, a ground power feed device, and a non-transitory storage medium that suppress exposure of the human body to a leakage magnetic field when a vehicle becomes difficult to move on a road where a ground power feed device is installed.

A first aspect of the invention relates to a moving body including a power receiving device configured to receive contactless power feed from a ground power feed device, and a control device. The control device is configured to take a getting-off prevention measure for preventing an occupant from getting off the moving body when the moving body gets into a state of being difficult to move on an electrified road where the ground power feed device is installed.

In the first aspect of the invention, the moving body may further include an information providing device configured to provide information to the occupant. The getting-off prevention measure may be to provide warning information for preventing the occupant from getting off the moving body through the information providing device.

In the first aspect of the invention, the getting-off prevention measure may be to request a special operation that is not normally requested for unlocking a door of the moving body.

In the first aspect of the invention, the moving body may further include a communication device configured to communicate with the ground power feed device. The control device may be configured to instruct the ground power feed device to take a power feed stop measure by the communication device when the moving body gets into the state of being difficult to move on the electrified road where the ground power feed device is installed.

In the first aspect of the invention, the control device may be configured to cancel the getting-off prevention measure when a completion signal for the power feed stop measure is received from the ground power feed device through the communication device.

In the first aspect of the invention, the moving body may further include an information providing device configured to provide information to the occupant and a communication device configured to communicate with the ground power feed device. The control device may be configured to instruct the ground power feed device to take a power feed stop measure by the communication device when the moving body gets into the state of being difficult to move on the electrified road where the ground power feed device is installed, and provide, to the occupant through the information providing device, at least one of information indicating that the getting-off prevention measure is cancelled, information indicating that power feed is stopped, information indicating that a risk of a leakage magnetic field is not present even after the occupant gets off the moving body, or information indicating that the occupant is allowed to get off the moving body, when a completion signal for the power feed stop measure is received from the ground power feed device by the communication device.

A second aspect of the invention relates to a ground power feed device including a power transmitting device and a control device. The power transmitting device is configured to perform contactless power feed to a moving body. The control device is configured to take a power feed stop measure for stopping power feed when the moving body gets into a state of being difficult to move on an electrified road where the ground power feed device is installed.

A third aspect of the invention relates to a ground power feed device including a power transmitting device, a communication device, and a control device. The power transmitting device is configured to perform contactless power feed to a moving body. The communication device is configured to communicate with the moving body. The control device is configured to instruct the moving body to take a getting-off prevention measure for preventing an occupant from getting off the moving body, by the communication device, when the moving body gets into a state of being difficult to move on an electrified road where the ground power feed device is installed.

A fourth aspect of the invention relates to a non-transitory storage medium. The non-transitory storage medium stores instructions that are executable by a computer configured to control a moving body configured to receive contactless power feed from a ground power feed device and that cause the computer to execute functions. The functions include causing the moving body to take a getting-off prevention measure for preventing an occupant from getting off the moving body when the moving body gets into a state of being difficult to move on an electrified road where the ground power feed device is installed.

A fifth aspect of the invention relates to a non-transitory storage medium. The non-transitory storage medium stores instructions that are executable by a computer configured to control a ground power feed device configured to perform contactless power feed to a moving body and that cause the computer to execute functions. The functions include causing the ground power feed device to take a power feed stop measure for stopping power feed when the moving body gets into a state of being difficult to move on an electrified road where the ground power feed device is installed.

A sixth aspect of the invention relates to a non-transitory storage medium. The non-transitory storage medium stores instructions that are executable by a computer configured to control a ground power feed device including a power transmitting device configured to perform contactless power feed to a moving body and a communication device configured to communicate with the moving body and that cause the computer to execute functions. The functions include causing the ground power feed device to instruct the moving body to take a getting-off prevention measure for preventing an occupant from getting off the moving body, by the communication device, when the moving body gets into a state of being difficult to move on an electrified road where the ground power feed device is installed.

According to the aspects of the invention, when the moving body gets into a state of being difficult to move due to some factor, a getting-off prevention measure for preventing an occupant from getting off the moving body or power feed stop measure can be taken, whereby exposure of the human body to the leakage magnetic field can be suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG 1 is a schematic configuration diagram of a contactless power feed system;
FIG 2 is a diagram illustrating an example of a configuration of a ground power feed device and a vehicle;
FIG 3 is an operation sequence diagram for describing details of a process executed in a server, a ground power feed device, and a vehicle to perform contactless power feed;
FIG 4 is an operation sequence diagram for describing details of a process according to a first embodiment of the invention executed in the ground power feed device and the vehicle to prevent a vehicle occupant from getting off the vehicle and reduce exposure of a human body to a leakage magnetic field;
FIG 5 is an operation sequence diagram for describing details of a process according to a second embodiment of the invention executed in the ground power feed device and the vehicle to prevent a vehicle occupant from getting off the vehicle and reduce exposure of a human body to a leakage magnetic field; and
FIG 6 is a diagram illustrating an example of a configuration of a ground power feed device.

### DETAILED DESCRIPTION OF EMBODIMENTS

Hereinafter, embodiments will be described in detail with reference to the drawings. In the following description, the same reference numerals are given to the same constituent elements.

### First Embodiment

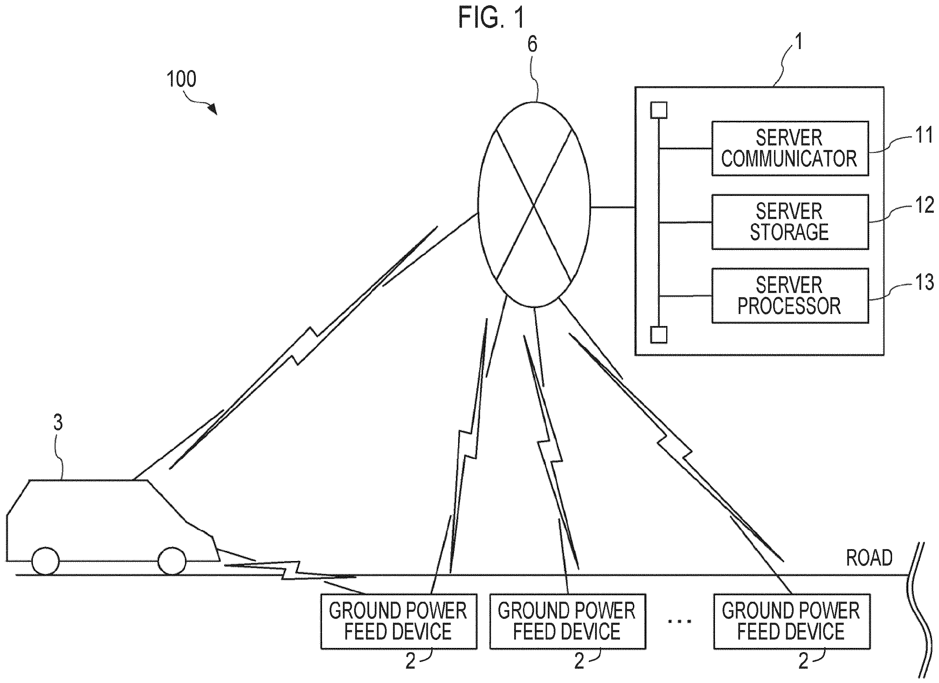

FIG 1 is a schematic configuration diagram of a contactless power feed system 100 according to a first embodiment of the invention.

The contactless power feed system 100 includes a server 1, ground power feed devices 2, and a vehicle 3, which is an example of a moving body, and is configured to execute contactless power transmission (contactless power feed) by magnetic resonance coupling (magnetic field resonance) from the ground power feed device 2 to the vehicle 3. FIG 1 illustrates an example of installation of the ground power feed devices 2, where the ground power feed devices 2 are set continuously at predetermined intervals along a road by way of example. In the following description, the road where the ground power feed devices 2 are installed will be referred to as an "electrified road" as needed.

As illustrated in FIG 1, the server 1 includes a server communicator 11, a server storage 12, and a server processor 13.

The server communicator 11 includes a communication interface circuit for connecting the server 1 to a network 6 and is configured to communicate with the ground power feed devices 2 and the vehicle 3 through the network 6.

The server storage 12 includes a storage medium such as a hard disk drive (HDD), a solid state drive (SSD), an optical recording medium, or a semiconductor memory, and stores various computer programs, data, or the like, used for processing in the server processor 13.

The server processor 13 includes one or more central processing units (CPUs) and peripheral circuits thereof. The server processor 13 executes various computer programs stored in the server storage 12 to integrally control the overall operation of the server 1, and is, for example, a processor.

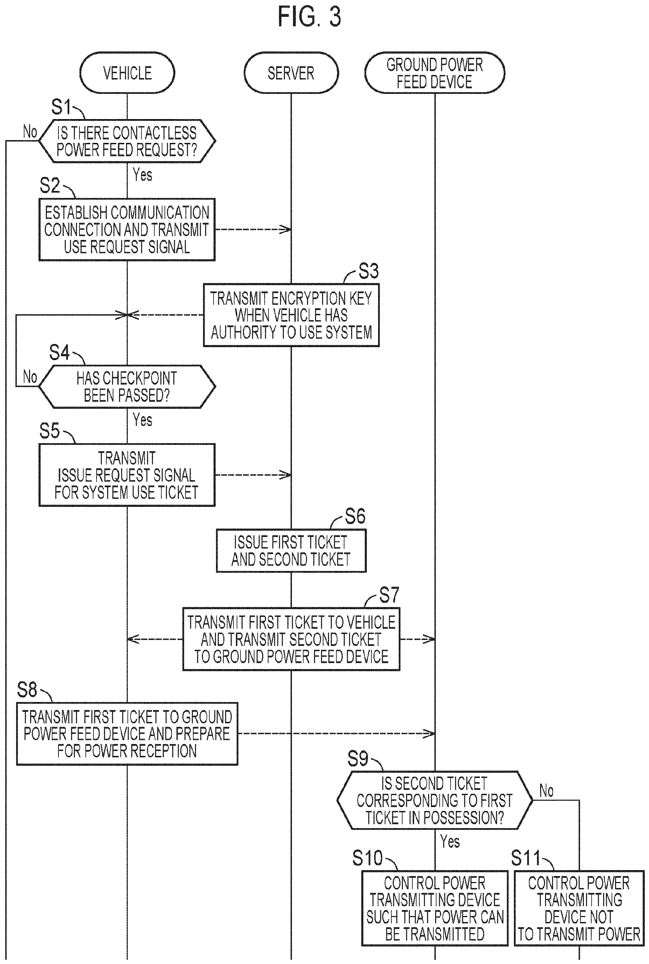

When the server processor 13 and thus the server 1 receive a use request signal of the contactless power feed system 100 from the vehicle 3, the server 1 checks whether or not the vehicle 3 is authorized to use the system, and when the check has been completed, exchanges various information with the vehicle 3 and the ground power feed device 2 such that the vehicle 3 can receive power feed from the ground power feed devices 2. The details of the exchange will be described later with reference to FIG 3.

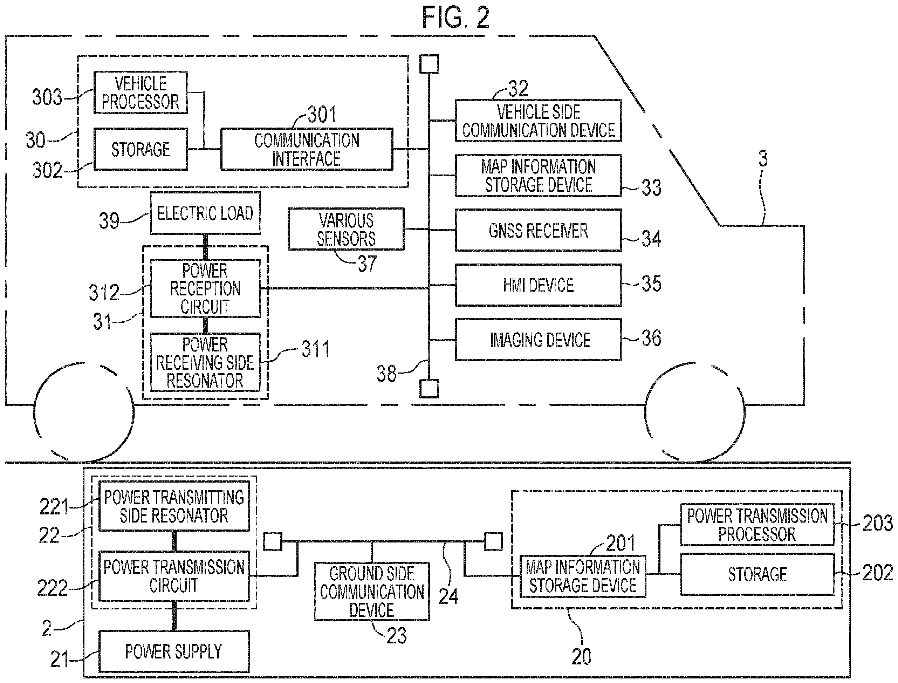

Next, a configuration of the ground power feed device 2 and the vehicle 3 according to the present embodiment will be described with reference to FIG 2. FIG 2 is a diagram illustrating an example of the configuration of the ground power feed device 2 and the vehicle 3 according to the present embodiment.

As illustrated in FIG 2, the ground power feed device 2 includes a power supply 21, a power transmitting device 22, a ground side communication device 23, and a power transmission control device 20. The power transmitting device 22 and the ground side communication device 23 are connected to the power transmission control device 20 through an internal network 24 of the ground power feed device 2 conforming to standards, such as a controller area network (CAN).

The power supply 21 supplies power to the power transmitting device 22. The power supply 21 is, for example, a commercial alternate current power supply that supplies single-phase alternate current power. The power supply 21 may be another alternate current power supply that supplies three-phase alternate current power, or may be a direct current power supply such as a fuel cell.

The power transmitting device 22 is a device for transmitting power supplied from the power supply 21 to the vehicle 3 and includes a power transmitting side resonator 221 and a power transmission circuit 222.

The power transmitting side resonator 221 is a resonance circuit including a power transmitting coil, and is configured to resonate at a predetermined resonance frequency f₀. In the present embodiment, the resonance frequency f₀ is set to 85 [kHz] defined by the SAETIR J2954 standard as a frequency band for contactless power transmission, but is not limited thereto. The vehicle 3 is provided with a power receiving side resonator 311 corresponding to the power transmitting side resonator 221. The power receiving side resonator 311 is a resonance circuit including a power receiving coil, and is configured to resonate at the same resonance frequency f₀ as the power transmitting side resonator 221. By resonating the power transmitting side resonator 221, the power transmitting coil of the power transmitting side resonator 221 and the power receiving coil of the power receiving side resonator 311, which are spaced apart, are magnetically coupled. Thereby, contactless power transmission from the power transmitting device 22 to the power receiving device 31 is performed.

The power transmission circuit 222 is an electric circuit that includes a rectifier and an inverter. The power transmission circuit 222 is configured to be controlled by the power transmission control device 20 and convert alternate current power supplied from the power supply 21 into direct current power with the rectifier. In addition, the power transmission circuit 222 is configured to convert the converted direct current power into desired alternate current power that can cause the power transmitting side resonator 221 to resonate with the inverter, and then supply the power transmitting side resonator 221 with the desired alternate current power. The configuration of the power transmission circuit 222 is not limited to such a configuration, and may be changed as appropriate according to the type of the power supply 21.

The ground side communication device 23 is configured to communicate with at least the server 1 and the vehicle 3. Further, in the present embodiment, the ground side communication device 23 is further configured to communicate with an external communication center (not shown).

Specifically, the ground side communication device 23 is configured to connect to the network 6 through a wireless base station by accessing the wireless base station connected to the network 6 (see FIG 1) through a gateway or the like. In this way, wide-area wireless communication is performed between the ground side communication device 23 and the server 1, and various types of information needed to perform contactless power feed to the vehicle 3 are exchanged with the server 1. The wide-area wireless communication is communication with a longer communication distance than short-range wireless communication, which will be described later, and is communication with a communication distance of 10 meters to 10 kilometers, for example. As the wide-area wireless communication, various wireless communication with a long communication distance can be used, for example, communication conforming to any communication standard such as 3GPP (registered trademark) and 4G, LTE, 5G, WiMAX established by IEEE can be used.

The ground side communication device 23 is configured to directly perform short-range wireless communication with a vehicle side communication device 32 mounted on the vehicle 3. The short-range wireless communication is communication with a shorter communication distance than wide-area wireless communication, for example, communication with a communication distance of less than 10 meters. As the short-range wireless communication, various short-range wireless communications with a short communication distance can be used, for example, communication conforming to any communication standard established by IEEE, ISO, IEC, or the like (for example, Bluetooth (registered trademark), ZigBee (registered trademark)) can be used. As techniques for performing short-range wireless communication, for example, radio frequency identification (RFID) and dedicated short range communication (DSRC) are used.

The ground side communication device 23 is configured to communicate with an external communication center such as a road traffic information center and receive external information. The external information is, for example, road traffic information such as congestion information for an electrified road where the ground power feed device 2 is installed.

The power transmission control device 20 includes a communication interface 201, a storage 202, and a power transmission processor 203.

The communication interface 201 is a communication interface circuit for connecting the power transmission control device 20 to the internal network 24 of the ground power feed device 2.

The storage 202 has a storage medium such as an HDD, an SSD, an optical recording medium, or a semiconductor memory, and stores various computer programs, data, and the like used for processing in the power transmission processor 203.

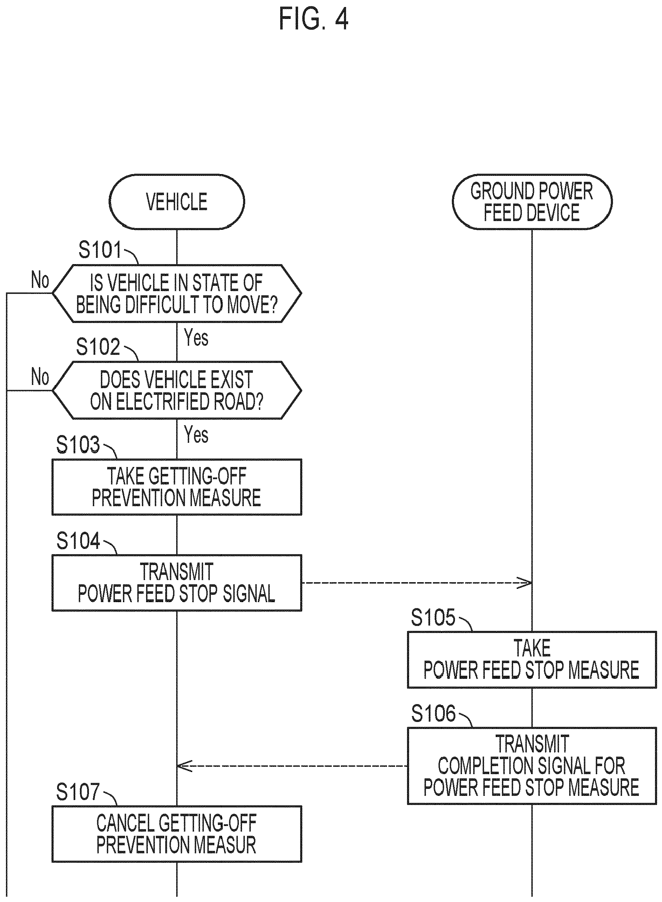

The power transmission processor 203 includes one or more central processing units (CPUs) and peripheral circuits thereof. The power transmission processor 203 executes various computer programs stored in the storage 202 to integrally control the overall operation of the ground power feed device 2, and is, for example, a processor. The details of processes executed in the power transmission processor 203 and thus the power transmission control device 20 will be described later with reference to FIGS. 3 and 4.

The vehicle 3 includes the power receiving device 31, the vehicle side communication device 32, a map information storage device 33, a global navigation satellite system (GNSS) receiver 34, a human-machine interface (HMI) device 35, an imaging device 36, various sensors 37, and a vehicle control device 30. The vehicle side communication device 32, the map information storage device 33, the GNSS receiver 34, the HMI device 35, the imaging device 36, and various sensors 37 are connected to the vehicle control device 30 through an in-vehicle network 38 conforming to standards such as CAN.

The power receiving device 31 includes a power receiving side resonator 311 and a power reception circuit 312.

As described above, the power receiving side resonator 311 is a resonance circuit including the power receiving coil, and is configured to resonate at the same resonance frequency f₀ as the power transmitting side resonator 221.

The power reception circuit 312 is an electric circuit including a rectifier and a DC-DC converter, and is configured to be controlled by the vehicle control device 30 such that alternate current power output from the power receiving side resonator 311 is converted into direct current power by the rectifier and supplied to an electric load 39 through the DC-DC converter. Examples of the electric load 39 include a battery and an electric motor, but are not particularly limited. In the present embodiment, the power reception circuit 312 is connected to a battery as the electric load 39.

The vehicle side communication device 32 is configured to communicate with at least the server 1 and the ground power feed device 2, and in the present embodiment, is also configured to communicate with an external communication center (not shown).

Specifically, the vehicle side communication device 32 is configured to connect to the network 6 through a wireless base station by accessing the wireless base station connected to the network 6 (see FIG 1) through a gateway or the like. In this way, wide-area wireless communication is performed between the vehicle side communication device 32 and the server 1, and various types of information needed to receive contactless power feed from ground power feed device 2 are exchanged with the server 1.

The vehicle side communication device 32 is configured to directly perform short-range wireless communication with the ground side communication device 23 of the ground power feed device 2.

The vehicle side communication device 32 is configured to communicate with an external communication center such as a road traffic information center and receive external information.

The map information storage device 33 stores map information including position information for the road and information about the road type (for example, information regarding whether the road is a highway or an electrified road).

The GNSS receiver 34 receives radio waves from satellites, specifies the latitude and longitude of the vehicle 3, and detects the current position of the vehicle 3. The GNSS receiver 34 transmits information about the current position of the detected vehicle 3 to the vehicle control device 30.

The HMI device 35 is an interface for exchanging information with a vehicle occupant. The HMI device 35 according to the present embodiment includes a display and a speaker for providing various types of information to the vehicle occupant, and a touch panel for enabling the vehicle occupant to perform information input operations on the display. Of course, instead of the touch panel or in combination with the touch panel, another input device such as an operation button may be provided. The HMI device 35 transmits input information input by the vehicle occupant to various devices that need the input information, and provides the input information to the vehicle occupant, for example, by displaying the information received through the in-vehicle network 38 on the display.

The imaging device 36 captures and outputs an image around the vehicle 3. The image captured by the imaging device 36 is used, for example, by the vehicle control device 30 to detect objects around the vehicle 3.

Various sensors 37 are, for example, sensors such as a travelling load sensor, a vehicle speed sensor, and a wheel speed sensor. The traveling load sensor detects an output voltage proportional to the depression amount of the accelerator pedal as a parameter corresponding to a traveling load. The vehicle speed sensor detects the speed of the vehicle 3. The wheel speed sensor detects the rotational speed of the tire. The sensors are merely examples of sensors, and other sensors may be provided instead of or in addition to the sensors.

The vehicle control device 30 includes a communication interface 301, a storage 302 and a vehicle processor 303.

The communication interface 301 is a communication interface circuit for connecting the vehicle control device 30 to in-vehicle network 38.

The storage 302 has a storage medium such as an HDD, an SSD, an optical recording medium, or a semiconductor memory, and stores various computer programs, data, and the like used for processing in the vehicle processor 303.

The vehicle processor 303 includes one or more CPUs and peripheral circuits thereof. The vehicle processor 303 executes various computer programs stored in the storage 302 to integrally control the overall operation of the vehicle 3, and is, for example, a processor. The details of processes executed in the vehicle processor 303 and thus the vehicle control device 30 will be described later with reference to FIGS. 3 and 4.

FIG 3 is an operation sequence diagram for describing the details of a process (computer program) executed in the server 1, the ground power feed device 2, and the vehicle 3 to perform contactless power feed.

In step S1, the vehicle control device 30 determines whether or not the vehicle 3 (vehicle having the vehicle control device 30) in which the vehicle control device 30 is mounted requests contactless power feed. When the vehicle having the vehicle control device 30 requests contactless power feed, the vehicle control device 30 proceeds to processing of step S2. On the other hand, when the vehicle having the vehicle control device 30 does not request contactless power feed, the vehicle control device 30 ends the current process. In the present embodiment, the vehicle occupant can manually switch between making the request for contactless power feed and not making the request, through the HMI device 35; however, the invention is not limited thereto, and making or not making the request for contactless power feed may be automatically switched, for example, according to the charging rate of the battery.

In step S2, the vehicle control device 30 performs, for example, a three-way handshake to establish a communication connection with the server 1, and then transmits a use request signal for the contactless power feed system 100 to the server 1. The use request signal includes, for example, various types of information (such as authentication information) needed to use the contactless power feed system 100.

In step S3, the server 1 checks whether the vehicle 3, which is the transmitter of the use request signal, is authorized to use the contactless power feed system 100 based on the authentication information and the like, and an encryption key for decrypting an encrypted system use ticket is transmitted to the vehicle 3 confirmed as having the authority. The system use ticket is a virtual ticket for using the contactless power feed system 100.

In step S4, the vehicle control device 30 determines whether or not a checkpoint set at any point before an electrified road section has been passed. When the checkpoint has been passed, the vehicle control device 30 proceeds to processing of step S5. On the other hand, when the checkpoint has not been passed, the vehicle control device 30 determines again whether or not the checkpoint has been passed after the predetermined time has elapsed.

Regarding whether or not the checkpoint has been passed, for example, when a gate is installed at the checkpoint, the vehicle control device 30 may receive a signal generated from the gate to determine that the checkpoint has been passed. In this case, the vehicle control device 30 can receive, from the gate, checkpoint information including position information for the passed checkpoint or the like. For example, when the checkpoint information is included in the map information, or when the checkpoint information can be received from the server 1, the vehicle control device 30 may determine that the vehicle has passed through the checkpoint based on position information for the vehicle having the vehicle control device 30 and the position information for the checkpoint. Thus, the method of determining whether or not the checkpoint has been passed is not particularly limited.

In the present embodiment, in step S4, a determination is made as to whether or not the checkpoint has been passed, but the present embodiment is not limited thereto, and a determination may be made as to whether or not a checkpoint has been approached, for example.

As to whether or not the vehicle has approached the checkpoint, for example, when the checkpoint is provided with a device transmitting a signal to the vehicle 3 positioned within a certain range with respect to the checkpoint, the vehicle control device 30 can make a determination by receiving the signal generated by the device, but the present embodiment is not limited thereto, and the determination can be made based on the position information for the vehicle having the vehicle control device 30 and the position information for the checkpoint. For example, when a road section of a predetermined range where signal waiting occurs is an electrified road section such that contactless power feed can be executed for a vehicle waiting for a signal, the certain range with respect to the checkpoint may be some road section before entering the electrified road section.

In step S5, the vehicle control device 30 transmits, to the server 1, an issue request signal for a system use ticket, which is a virtual ticket for using the contactless power feed system 100. The issue request signal for the system use ticket includes identification information for the vehicle having the vehicle control device 30 and checkpoint information.

In step S6, when the server 1 receives an issue request the system use ticket, the server 1 specifies the vehicle 3 that is a requester of the issuance based on vehicle identification information included in the issue request. Then, the server 1 issues a first ticket which is a system use ticket to be transmitted to the vehicle 3, which is the specified requester of the issuance and which is a system use ticket unique to each vehicle 3 having the authority to use the contactless power feed system 100. At the same time, the server 1 issues a second ticket which is a system use ticket corresponding to the first ticket and which is a system use ticket to be transmitted to the ground power feed device 2.

In step S7, the server 1 transmits the encrypted first ticket to the vehicle 3 which is the requester of the issuance of the system use ticket, and transmits the second ticket to each ground power feed device 2 associated with the checkpoint. The ground power feed device 2 associated with the checkpoint is a ground power feed device 2 installed in the electrified road section on which the vehicle 3 that has passed through the checkpoint may travel, and in the server storage 12 of the server 1 according to the present embodiment, for each checkpoint, the ground power feed device 2 associated with the checkpoint is stored in advance.

In step S8, the vehicle control device 30 decrypts the received first ticket by using the encryption key, and starts periodic and direct transmission of a power feed request signal including the decrypted first ticket to the ground power feed device 2, by short-range wireless communication through the vehicle side communication device 32. At the same time, the vehicle control device 30 controls the power transmitting device 22 such that power can be received when the vehicle having the vehicle control device 30 travels on the ground power feed device 2.

In step S9, when the power feed request signal is received with a predetermined communication strength (received signal strength) or more, the power transmission control device 20 determines whether or not the second ticket corresponding to the first ticket included in the power feed request signal has already been received from the server 1, that is, whether or not the second ticket corresponding to the received first ticket is in possession. When the second ticket corresponding to the first ticket is in possession, the power transmission control device 20 proceeds to processing of step S10. On the other hand, when the second ticket corresponding to the first ticket is not in possession, the ground power feed device 2 proceeds to processing of step S 11.

In step S10, the power transmission control device 20 determines that the vehicle 3 that is to travel on a ground power feed device having the power transmission control device 20 from now on is a vehicle that requests contactless power feed and has obtained permission to use the contactless power feed system 100 (hereinafter referred to as "power feed target vehicle"), and controls the power transmitting device 22 such that power can be transmitted when the vehicle 3 travels on the ground power feed device having the power transmission control device 20.

In step S11, the power transmission control device 20 of the ground power feed device 2 determines that the vehicle 3 that is to travel on the ground power feed device having the power transmission control device 20 is not a power feed target vehicle, and controls the power transmitting device 22 not to transmit power even when the vehicle 3 travels on the ground power feed device having the power transmission control device 20.

### Countermeasure Leakage Magnetic Field

Incidentally, on the electrified road, the vehicle 3 may be difficult to move from the stop position due to some factor, for example, when the vehicle 3 breaks down or gets stranded due to a stuck, or when the vehicle 3 gets caught up in a large-scale vehicle stagnation caused by stranded vehicles due to an accident or bad weather, and so on. In such a case, carelessly getting off the vehicle 3 may cause the human body to be exposed to a leakage magnetic field generated when power is transmitted from the ground power feed device 2 to the vehicle 3.

Therefore, in the present embodiment, when the vehicle 3 gets into a state of being difficult to move on the electrified road, a getting-off prevention measure is taken to prevent a vehicle occupant from getting off the vehicle. Hereinafter, referring to FIG 4, the getting-off prevention measures according to the present embodiment will be described.

FIG 4 is an operation sequence diagram for describing details of a process (computer program) according to the present embodiment executed in the ground power feed device 2 and the vehicle 3 to prevent the vehicle occupant from getting off the vehicle and reduce exposure of the human body to a leakage magnetic field.

In step S101, the vehicle control device 30 determines whether or not the vehicle 3 has fallen into a state of being difficult to move. The determination is periodically made, for example. When the determination is made that the vehicle 3 has fallen into the state of being difficult to move, the vehicle control device 30 proceeds to processing of step S 102. On the other hand, when the determination is not made that the vehicle 3 has fallen into the state of being difficult to move, the vehicle control device 30 ends the current process.

The method of determining whether or not the vehicle 3 has fallen into the state of being difficult to move is not particularly limited; for example, when the vehicle 3 stops in a state in which a failure or defect directly linked to the impossibility of traveling is detected by a self-diagnostic function, a determination can be made that the vehicle 3 has fallen into the state of being difficult to move due to the vehicle failure. Further, for example, when the vehicle speed is low even though a requested torque is high, or when the wheel speed difference between the drive wheels and the non-drive wheels (rear wheels when front-wheel drive, front wheels when rear-wheel drive) is large, a determination can be made that the vehicle 3 has fallen into the state of being difficult to move due to being stuck. Further, for example, when a determination is made that the vehicle 3 is caught in a vehicle stagnation based on image information about the surroundings of the vehicle 3, external information, or the like, a determination is made that the vehicle 3 has fallen into the state of being difficult to move due to the vehicle stagnation. Further, for example, when a vehicle occupant requests road service through the HMI device 35 in a state in which the vehicle 3 is stopped, a determination can be made that the vehicle 3 has fallen into the state of being difficult to move due to some factor.

In step S102, the vehicle control device 30 determines whether or not the vehicle 3 exists on the electrified road. When the vehicle 3 exists on the electrified road, the vehicle control device 30 proceeds to processing of step S103. On the other hand, when the vehicle 3 does not exist on the electrified road, the vehicle control device 30 ends the current process.

A determination as to whether or not the vehicle 3 exists on the electrified road can be made based on current position information and map information, for example. Further, for example, when the time change of the received power or the like is recorded as history information for the received power, the determination can be made based on the most recent history information for the received power. Specifically, when power is received within the most recent predetermined period of time, the vehicle is highly probable to still exist on the electrified road, and thus a determination can be made that the vehicle exists on the electrified road.

In step S103, the vehicle control device 30 takes a getting-off prevention measure for preventing the vehicle occupant from getting off the vehicle.

An example of the getting-off prevention measure is giving a getting-off warning to the vehicle occupant by using text, images, lamps, sounds, or a combination thereof. In addition, for example, a special operation is requested that is not normally requested for unlocking a door, such as displaying a door unlock button on the display of the HMI device 35 such that the door can be unlocked when the door unlock button is pressed, which would not allow the door to be easily unlocked. In the present embodiment, as the getting-off prevention measure, a warning message for preventing getting off the vehicle is displayed on the display of the HMI device 35 to give the getting-off warning. Of course, it is also possible not to allow the door to be easily unlocked while such a getting-off warning is given.

In step S104, the vehicle control device 30 transmits a power feed stop signal from the vehicle side communication device 32 to the surrounding ground power feed devices 2 by short-range wireless communication.

In step S105, upon receiving the power feed stop signal through the ground side communication device 23, the power transmission control device 20 takes a power feed stop measure. Specifically, the power transmission control device 20 controls the power transmission circuit 222 and thus the power transmitting device 22 such that power cannot be transmitted to the vehicle 3.

In step S106, the power transmission control device 20 transmits a completion signal for the power feed stop measure for informing the vehicle 3, which is the transmitter of the power feed stop signal, that the power feed stop measure has been completed by short-range wireless communication with the vehicle side communication device 32 through the ground side communication device 23.

In step S107, when the completion signal for the power feed stop measure is received through the vehicle side communication device 32, the vehicle control device 30 cancels the getting-off prevention measure. For example, the vehicle control device 30 ends the getting-off warning when the getting-off warning has been given as the getting-off prevention measure, and cancels the request for the special operation to unlock the door when the request has been made.

In addition to the cancellation of the getting-off prevention measure, for example, some measures may be taken to inform the occupant of the vehicle that the getting-off prevention measure has been cancelled, that the power feed has been stopped, that a risk of the leakage magnetic field is not present even when the occupant gets off the vehicle, or that the occupant is allowed to get off the vehicle. In the present embodiment, a message is displayed on the display of the HMI device 35 informing that the risk of being exposed to the leakage magnetic field is not present even when the occupant gets off the vehicle, and that the occupant is allowed to get off the vehicle.

The vehicle 3 (moving body) according to the present embodiment described above includes the power receiving device 31 for receiving contactless power feed from the ground power feed device 2 and the vehicle control device 30 (control device). The vehicle control device 30 is configured to take the getting-off prevention measure for preventing the occupant from getting off the vehicle when the vehicle 3 gets into a state of being difficult to move on an electrified road where the ground power feed device 2 is installed.

In this way, even when the vehicle 3 gets into a state of being difficult to move for some factor, it is possible to prevent the vehicle occupant from getting off the vehicle, thereby reducing exposure of the human body to the leakage magnetic field.

The getting-off prevention measure is, for example, providing, to vehicle occupant, warning information for preventing the vehicle occupant from getting off the vehicle through the HMI device 35 (information providing device) for providing information to the vehicle occupant. Further, for example, to unlock the door of the vehicle 3, the special operation that is not normally requested is requested.

The vehicle 3 according to the present embodiment further includes the vehicle side communication device 32 (communication device) capable of communicating with the ground power feed device 2. The vehicle control device 30 is further configured to instruct the ground power feed device 2 to take a power feed stop measure by the vehicle side communication device 32 when the vehicle 3 gets into a state of being difficult to move on the electrified road where the ground power feed device 2 is installed.

In this way, power transmission by the ground power feed device 2 can be stopped, and thus exposure of the human body to the leakage magnetic field can be reliably reduced.

The vehicle control device 30 according to the present embodiment is further configured to cancel the getting-off prevention measure when the vehicle side communication device 32 receives a completion signal for the power feed stop measure from the ground power feed device 2.

In this way, a situation in which the getting-off prevention measure continues even though the possibility of being exposed to the leakage magnetic field is eliminated can be suppressed.

Further, when the completion signal for the power feed stop measure is received from the ground power feed device 2 by the vehicle side communication device 32, the vehicle control device 30 according to the present embodiment is configured to provide, to the vehicle occupant through the HMI device 35, at least one of information indicating that the getting-off prevention measure is cancelled, information indicating that power feed is stopped, information indicating that the risk of a leakage magnetic field is not present even after the occupant gets off the vehicle, or information indicating that the occupant is allowed to get off the vehicle. In this way, the vehicle occupant can easily determine whether or not the occupant is allowed to get off the vehicle.

### Second Embodiment

Next, a second embodiment of the invention will be described. The present embodiment is different from the first embodiment in that on the ground power feed device side, a determination as to whether or not the vehicle 3 has fallen into a state of being difficult to move is made, and a getting-off prevention measure is taken. The difference will be mainly described below.

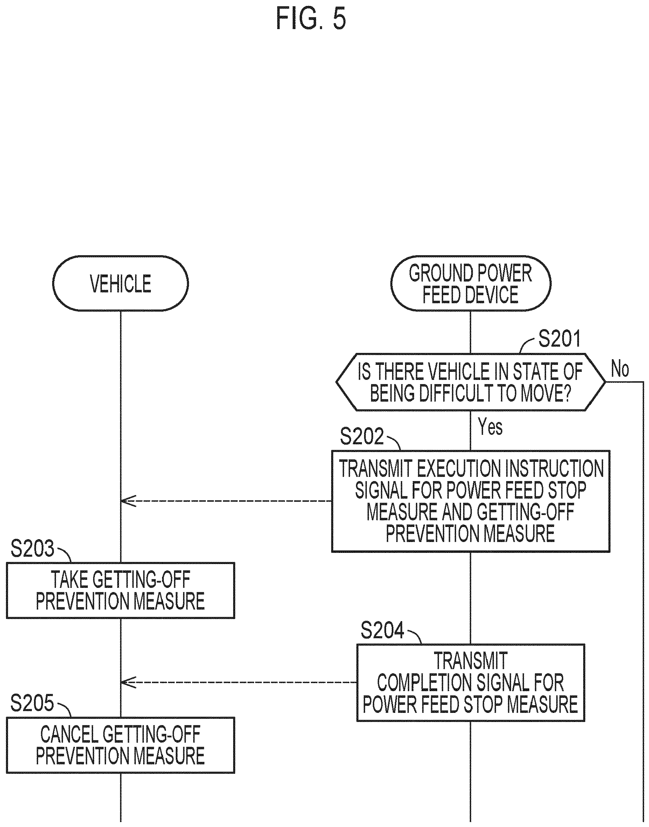

FIG 5 is an operation sequence diagram for describing details of a process (computer program) according to the present embodiment executed in the ground power feed device 2 and the vehicle 3 to prevent the vehicle occupant from getting off the vehicle and reduce exposure of the human body to a leakage magnetic field.

In step S201, the power transmission control device 20 determines whether or not there is a vehicle that has fallen into a state of being difficult to move within a range covered by the leakage electromagnetic field of the device having the power transmission control device 20. The determination is periodically made, for example. When the power transmission control device 20 determines that there is the vehicle 3 that has fallen into the state of being difficult to move, the ground power feed device proceeds to processing of step S202. On the other hand, when the power transmission control device 20 determines that there is no vehicle 3 that has fallen into the state of being difficult to move, the ground power feed device ends the current process.

The method for determining whether or not there is a vehicle that has fallen into a state of being difficult to move within the range covered by the leakage electromagnetic field of the device having the power transmission control device 20 is not particularly limited; however, for example, when the electrified road where the device having the power transmission control device 20 is installed is a road where power feed to parked vehicles is not considered (for example, a highway or an automobile exclusive road), the determination can be made based on the power transmission time for the vehicle 3. Specifically, when the power transmission time to the vehicle 3 is for a predetermined time or longer, the determination can be made that the vehicle 3 has fallen into a state in which the vehicle 3 is difficult to move on the spot due to some factor, rather than a state in which the power transmission time is made longer than usual due to traffic congestion or the like. Further, for example, when the ground power feed device 2 is provided with an imaging device (not shown) for checking the condition on the electrified road, the determination can be made based on an image captured by the imaging device. In making the determination, external information such as congestion information may be further considered.

In step S202, the power transmission control device 20 takes the power feed stop measure, and provides the vehicle 3 that has fallen into the state of being difficult to move with a getting-off prevention measure instruction to take the getting-off prevention measure. Specifically, the power transmission control device 20 transmits an execution instruction signal for the getting-off prevention measure from the ground side communication device 23 to the vehicle side communication device 32 of the vehicle 3 that has fallen into the state of being difficult to move by short-range wireless communication. The content of the power feed stop measure is the same as in the first embodiment.

In step S203, when the execution instruction signal for the getting-off prevention measure is received through the vehicle side communication device 32, the vehicle control device 30 takes the getting-off prevention measure. The content of the getting-off prevention measure is the same as in the first embodiment.

In step S204, when the power feed stop measure is completed, the power transmission control device 20 transmits, by short-range wireless communication, the completion signal for the power feed stop measure from the ground side communication device 23 to the vehicle side communication device 32 of the vehicle 3 to which the getting-off prevention measure instruction has been provided.

In step S205, when the completion signal for the power feed stop measure is received through the vehicle side communication device 32, the vehicle control device 30 cancels the getting-off prevention measure.

The ground power feed device 2 according to the present embodiment described above includes the power transmitting device 22 for performing contactless power feed to the vehicle 3 (moving body) and the power transmission control device 20 (control device). The power transmission control device 20 is configured to take the power feed stop measure not to perform contactless power feed when the vehicle 3 gets into a state of being difficult to move on the electrified road where the ground power feed device 2 is installed.

In this way, even when the vehicle 3 gets into the state of being difficult to move for some factor, power transmission by the ground power feed device 2 can be stopped, and thus exposure of the human body to the leakage magnetic field can be reliably reduced.

Further, the power transmission control device 20 according to the present embodiment is configured to instruct the vehicle 3 to take the getting-off prevention measure by the ground side communication device 23 when the vehicle 3 gets into the state of being difficult to move on the electrified road where the ground power feed device 2 is installed.

In this way, even when the vehicle 3 gets into a state of being difficult to move for some factor, it is possible to prevent the vehicle occupant from getting off the vehicle, thereby reducing exposure of the human body to the leakage magnetic field.

Although the embodiments of the invention have been described above, the above embodiments merely show a part of application examples of the invention, and are not intended to limit the technical scope of the invention to the specific configurations of the embodiments.

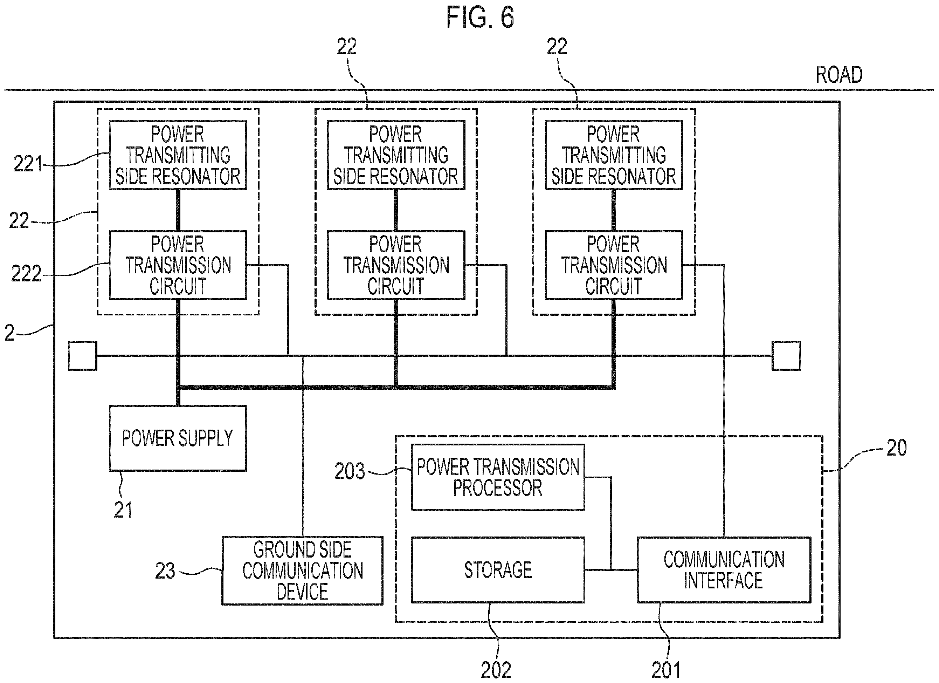

For example, in each of the embodiments, the ground power feed device 2 may include a plurality of the power transmitting devices 22 controlled by one power transmission control device 20, for example, as illustrated in FIG 6.

Further, in each of the embodiments, the power feed stop signal has been transmitted directly from the vehicle 3 to the ground power feed device 2 by short-range wireless communication; however, the power feed stop signal may be transmitted indirectly from the vehicle 3 to the ground power feed device 2 through the server 1. The same applies to the transmission of the power feed stop completion signal and the execution instruction signal for the getting-off prevention measure.

Further, each of computer programs that are executed in the vehicle control device 30 and the power transmission control device 20 to prevent an occupant of the vehicle from getting off the vehicle and reduce exposure of the human body to the leakage magnetic field, which has been described in FIGS. 4 and 5, may be provided in a form recorded on a computer-readable portable recording medium such as a semiconductor memory, magnetic recording medium, or optical recording medium. Further, each of computer programs executed in the vehicle control device 30 and the power transmission control device 20 may be stored in a non-transitory storage medium storing instructions that are executable by a computer and that cause the computer to execute functions.

## Claims

1. A moving body comprising:
a power receiving device (31) configured to receive contactless power feed from a ground power feed device (2); and
a control device (30) configured to take a getting-off prevention measure for preventing an occupant from getting off the moving body when the moving body gets into a state of being difficult to move on an electrified road where the ground power feed device (2) is installed.

2. The moving body according to claim 1, further comprising an information providing device configured to provide information to the occupant,
wherein the getting-off prevention measure is to provide warning information for preventing the occupant from getting off the moving body through the information providing device.

3. The moving body according to claim 1 or 2, wherein the getting-off prevention measure is to request a special operation that is not normally requested for unlocking a door of the moving body.

4. The moving body according to claim 1 or 2, further comprising a communication device (32) configured to communicate with the ground power feed device (2),
wherein the control device (30) is configured to instruct the ground power feed device (2) to take a power feed stop measure by the communication device (32) when the moving body gets into the state of being difficult to move on the electrified road where the ground power feed device (2) is installed.

5. The moving body according to claim 4, wherein the control device (30) is configured to cancel the getting-off prevention measure when a completion signal for the power feed stop measure is received from the ground power feed device (2) through the communication device (32).

6. The moving body according to claim 1, further comprising:
an information providing device configured to provide information to the occupant; and
a communication device (32) configured to communicate with the ground power feed device (2),
wherein the control device (30) is configured to
instruct the ground power feed device (2) to take a power feed stop measure by the communication device (32) when the moving body gets into the state of being difficult to move on the electrified road where the ground power feed device (2) is installed, and
provide, to the occupant through the information providing device, at least one of information indicating that the getting-off prevention measure is cancelled, information indicating that power feed is stopped, information indicating that a risk of a leakage magnetic field is not present even after the occupant gets off the moving body, or information indicating that the occupant is allowed to get off the moving body, when a completion signal for the power feed stop measure is received from the ground power feed device (2) by the communication device (32).

7. Aground power feed device (2) comprising:
a power transmitting device (22) configured to perform contactless power feed to a moving body; and
a control device (20) configured to take a power feed stop measure for stopping power feed when the moving body gets into a state of being difficult to move on an electrified road where the ground power feed device (2) is installed.

8. A ground power feed device (2) comprising:
a power transmitting device (22) configured to perform contactless power feed to a moving body;
a communication device (23) configured to communicate with the moving body; and
a control device (20) configured to instruct the moving body to take a getting-off prevention measure for preventing an occupant from getting off the moving body, by the communication device (23), when the moving body gets into a state of being difficult to move on an electrified road where the ground power feed device (2) is installed.

9. A non-transitory storage medium storing instructions that are executable by a computer configured to control a moving body configured to receive contactless power feed from a ground power feed device (2) and that cause the computer to execute functions comprising causing the moving body to take a getting-off prevention measure for preventing an occupant from getting off the moving body when the moving body gets into a state of being difficult to move on an electrified road where the ground power feed device (2) is installed.

10. A non-transitory storage medium storing instructions that are executable by a computer configured to control a ground power feed device (2) configured to perform contactless power feed to a moving body and that cause the computer to execute functions comprising causing the ground power feed device (2) to take a power feed stop measure for stopping power feed when the moving body gets into a state of being difficult to move on an electrified road where the ground power feed device (2) is installed.

11. A non-transitory storage medium storing instructions that are executable by a computer configured to control a ground power feed device (2) including a power transmitting device (22) configured to perform contactless power feed to a moving body and a communication device (23) configured to communicate with the moving body and that cause the computer to execute functions comprising causing the ground power feed device (2) to instruct the moving body to take a getting-off prevention measure for preventing an occupant from getting off the moving body, by the communication device (23), when the moving body gets into a state of being difficult to move on an electrified road where the ground power feed device (2) is installed.
